# EUROPEAN PATENT APPLICATION

(11) **EP 4 685 929 A1**
(43) Date of publication of application: **28.01.2026**
(21) Application number: 25150399.1
(22) Date of filing: 07.01.2025
(51) Int. Cl.: H01M 10/655, H01M 50/103, H01M 50/209, H01M 50/242, H01M 50/516, H01M 50/553, H01M 50/566, H01M 50/591

(54) **SECONDARY BATTERY AND BATTERY PACK INCLUDING THE SAME**

(30) Priority: 23.07.2024 KR 20240096932
(71) Applicant: Samsung SDI Co., Ltd, Gyeonggi-do 17084 (KR)
(72) Inventor: BAE, Kwang Soo, 16678 Suwon-si (KR); ROH, Heyoung Cheoul, 16678 Suwon-si (KR)
(74) Representative: Marks & Clerk LLP

(57) **Abstract**

A secondary battery includes a case, an electrode assembly inside the case, the electrode assembly including a first electrode and a second electrode, a first tab member connected to the first electrode, the first tab member extending from the electrode assembly, a cap assembly facing the electrode assembly, the cap assembly including a first terminal and a second terminal, and a first connection member between the electrode assembly and the cap assembly, the first connection member being connected to the first terminal and the first tab member, the first connection member further including a first deformation prevention part configured to prevent thermal deformation when connected to the first tab member.

## Description

### BACKGROUND

### 1. Field

Embodiments relate to a secondary battery and a battery pack including the same.

### 2. Description of the Related Art

In general, as demand for portable electronic products such as laptops, video cameras, and portable phones increases rapidly and commercialization of robots, electric vehicles, and the like begins in earnest, research on high-performance secondary batteries capable of repeated charging and discharging is actively being conducted.

Lithium secondary batteries are batteries that include a positive electrode and a negative electrode containing active materials capable of intercalation and deintercalation of lithium ions and an electrolyte, and the lithium secondary batteries generate electrical energy through oxidation and reduction reactions when lithium ions are intercalated/deintercalated into/from the positive and negative electrodes.

The above-described information disclosed in the technology that forms the background of the present disclosure is provided to improve understanding of the background of the present disclosure, and thus may include information that does not constitute the related art.

### SUMMARY

One or more embodiments include a secondary battery, the secondary battery including a case, an electrode assembly inside the case, the electrode assembly including a first electrode and a second electrode, a first tab member connected to the first electrode, the first tab member extending from the electrode assembly, a cap assembly facing the electrode assembly, the cap assembly including a first terminal and a second terminal, and a first connection member between the electrode assembly and the cap assembly, the first connection member being connected to the first terminal and the first tab member, the first connection member further including a first deformation prevention part configured to prevent thermal deformation when connected to the first tab member.

The first connection member may include a first current collector connected to the first terminal, and a first current collector plate fixed to the first current collector, the first current collector plate being connected to the first tab member.

The first current collector plate may include a first center plate in contact with the first current collector, and a first outer plate extending outward from the first center plate. The first outer plate may be welded to the first tab member.

The first tab member may include a pair of first tab members spaced apart from each other, and the first outer plate may include a pair of first outer plates extending from opposite sides of the first center plate, the pair of first outer plates being connected to the pair of first tab members.

The first deformation prevention part may include a plurality of reinforcement protrusions on the first outer plate.

The first deformation prevention part may include a plurality of reinforcement protrusions on the first outer plate, the first deformation prevention part being parallel to a first weld line of the first tab member.

The plurality of reinforcement protrusions may protrude upward from the first outer plate.

A centerline distance between the first weld line and the plurality of reinforcement protrusions, which may be on the first outer plate, may range from 3 mm to 4 mm.

The first deformation prevention part may include a plurality of reinforcement protrusions on the first outer plate, and the plurality of reinforcement protrusions may be perpendicular to a first weld line of the first tab member.

The first deformation prevention part may include a plurality of first reinforcement protrusions on the first outer plate, the plurality of first reinforcement protrusions being parallel to a first weld line of the first tab member, and may include a plurality of second reinforcement protrusions intersecting the first reinforcement protrusions.

The secondary battery may further include a second tab member connected to the second electrode, the second tab member spaced apart from the first tab member. The secondary battery may include a second connection member between the electrode assembly and the cap assembly, the second connection member connected to the second terminal and the second tab member, the second connection member including a second deformation prevention part configured to prevent thermal deformation when connected to the second tab member.

The second connection member may include a second current collector connected to the second terminal, and a second current collector plate fixed to the second current collector, the second current collector plate connected to the second tab member.

The second current collector plate may include a second center plate in contact with the second current collector, and a second outer plate extending outward from the second center plate. The second outer plate may be welded and connected to the second tab member.

The second tab member may include a pair of second tab members spaced apart from each other, and the second outer plate may include a pair of second outer plates, the pair of second outer plates may extend from opposite sides of the second center plate and may be connected to the pair of second tab members.

The second deformation prevention part may include a plurality of reinforcement protrusions on the second outer plate.

One or more embodiments include a battery pack, the battery pack including a housing, and a plurality of secondary batteries disposed inside the housing, wherein each of the secondary batteries includes a case, an electrode assembly inside the case, the electrode assembly including a first electrode and a second electrode, a first tab member connected to the first electrode, the first tab member extending from the electrode assembly, a cap assembly facing the electrode assembly, the cap assembly including a first terminal and a second terminal and a first connection member between the electrode assembly and the cap assembly, the first connection member connected to the first terminal and the first tab member, the first connection member including a first deformation prevention part configured to prevent thermal deformation when connected to the first tab member.

The battery pack may further include a second tab member connected to the second electrode, the second tab member spaced apart from the first tab member, and a second connection member between the electrode assembly and the cap assembly, the second connection member connected to the second terminal and the second tab member, the second connection member including a second deformation prevention part configured to prevent thermal deformation when connected to the second tab member.

The first deformation prevention part may include a plurality of reinforcement protrusions on the first connection member, and the second deformation prevention part may include a plurality of reinforcement protrusions on the second connection member.

The first deformation prevention part may include a plurality of reinforcement protrusions, the plurality of reinforcement protrusions may be parallel to a first weld line of the first connection member and the first tab member, and the second deformation prevention part may include a plurality of reinforcement protrusions, the plurality of reinforcement protrusions may be parallel to a second weld line of the second connection member and the second tab member.

The first deformation prevention part may include a plurality of reinforcement protrusions that may be perpendicular to a first weld line of the first connection member and the first tab member, and the second deformation prevention part may include a plurality of reinforcement protrusions that may be perpendicular to a second weld line of the second connection member and the second tab member.

These and other aspects and features of the present disclosure will be described in or will be apparent from the following description of some embodiments of the present disclosure. At least some of the above and other features of the invention are set out in the claims.

### BRIEF DESCRIPTION OF THE DRAWINGS

Features will become apparent to those of ordinary skill in the art by describing in detail example embodiments with reference to the attached drawings, in which:
FIG. 1 is a perspective view schematically illustrating a configuration of a battery pack according to one or more embodiments of the present disclosure;
FIG. 2 is a perspective view schematically illustrating a configuration of a secondary battery according to one or more embodiments of the present disclosure;
FIG. 3 is an exploded perspective view schematically illustrating a configuration of the secondary battery according to one or more embodiments of the present disclosure;
FIG. 4 is a cross-sectional view schematically illustrating a configuration of the secondary battery according to one or more embodiments of the present disclosure;
FIG. 5 is a view schematically illustrating a configuration of an electrode assembly according to one or more embodiments of the present disclosure;
FIG. 6 is an enlarged view schematically illustrating a configuration of a cap assembly according to one or more embodiments of the present disclosure;
FIG. 7 is an enlarged view schematically illustrating a configuration of a first connection member according to one or more embodiments of the present disclosure;
FIG. 8 is a perspective view schematically illustrating the connection members according to one or more embodiments of the present disclosure;
FIG. 9 is a cross-sectional view schematically illustrating the connection members according to one or more embodiments of the present disclosure.
FIG. 10 is a view schematically illustrating weld lines and a configuration of a deformation prevention part according to one or more embodiments of the present disclosure;
FIG. 11 is a view illustrating a first modified example of the deformation prevention part according to one or more embodiments of the present disclosure;
FIG. 12 is a view illustrating a second modified example of the deformation prevention part according to one or more embodiments of the present disclosure; and
FIGS. 13 and 14 are views for describing different cross-sectional shapes of the deformation prevention part according to one or more embodiments of the present disclosure.

### DETAILED DESCRIPTION

Example embodiments will now be described more fully hereinafter with reference to the accompanying drawings; however, they may be embodied in different forms and should not be construed as limited to the embodiments set forth herein. Rather, these embodiments are provided so that this disclosure will be thorough and complete, and will fully convey example implementations to those skilled in the art.

In the drawings, the dimensions of layers and regions may be exaggerated for clarity of illustration. It will also be understood that when a layer or element is referred to as being "on" another layer or substrate, it can be directly on the other layer or substrate, or intervening layers may also be present. Further, it will be understood that when a layer is referred to as being "under" another layer, it can be directly under, and one or more intervening layers may also be present. In addition, it will also be understood that when a layer is referred to as being "between" two layers, it can be the only layer between the two layers, or one or more intervening layers may also be present. Like reference numerals refer to like elements throughout.

It is to be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same or like elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B, and C," "at least one of A, B, or C," "at least one selected from a group of A, B, and C," or "at least one selected from among A, B, and C" are used to designate a list of elements A, B, and C, the phrase may refer to any and all suitable combinations or a subset of A, B, and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It is to be understood that, although the terms "first," "second," "third," etc. may be used herein to describe various elements, components, regions, layers, and/or sections, these elements, components, regions, layers, and/or sections are not to be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It is to be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below The device may be otherwise oriented (e.g., rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It is to be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all sub-ranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein.

References to two compared elements, features, etc. as being "the same" may mean that they are the same or substantially the same. Thus, the phrase "the same" or "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

When an arbitrary element is referred to as being arranged (or located or positioned) on the "above (or below)" or "on (or under)" a component, it may mean that the arbitrary element is placed in contact with the upper (or lower) surface of the component and may also mean that another component may be interposed between the component and any arbitrary element arranged (or located or positioned) on (or under) the component.

In addition, it is to be understood that when an element is referred to as being "coupled," "linked," or "connected" to another element, the elements may be directly "coupled," "linked," or "connected" to each other, or one or more intervening elements may be present therebetween, through which the element may be "coupled," "linked," or "connected" to another element. In addition, when a part is referred to as being "electrically coupled" to another part, the part may be directly electrically connected to another part or one or more intervening parts may be present therebetween such that the part and the another part are indirectly electrically connected to each other.

Throughout the specification, when "A and/or B" is stated, it means A, B, or A and B, unless otherwise stated. That is, "and/or" includes any or all combinations of a plurality of items enumerated. When "C to D" is stated, it means C or more and D or less, unless otherwise specified.

The terms used in the present specification are for describing embodiments of the present disclosure and are not intended to limit the present disclosure.

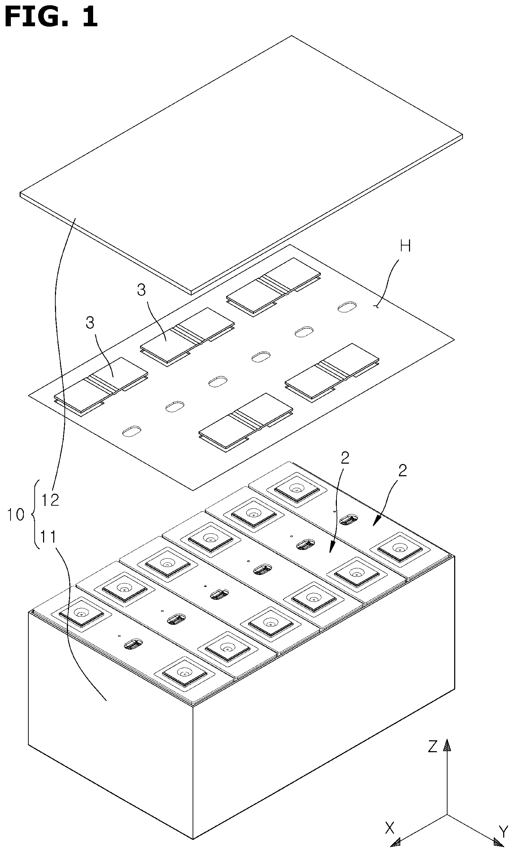

FIG. 1 is a perspective view schematically illustrating a configuration of a battery pack according to one or more embodiments of the present disclosure;

Referring to FIG. 1, the battery pack according to various embodiments may include a housing, a secondary battery, and a bus bar.

The housing 10 forms a schematic exterior of the battery pack, and may provide a space in which the secondary battery 2 may be accommodated.

The housing 10 according to the present embodiment may include a housing body 11 and a cover 12.

The housing body 11 may be formed to have a box shape, with an empty interior and one open side. The cross-sectional shape of the housing body 11 may be changed in design to have various shapes such as a polygonal shape, a circular shape, and an oval shape.

The cover 12 may be coupled to the housing body 11 and may close an internal space of the housing body 11. In one example, the cover 12 may be formed to have a substantially plate (e.g., flat) shape and may be disposed to face the open side of the housing body 11. The cover 12 may be fixed to the housing body 11 by various types of coupling methods such as bolting, welding, and fitting.

The secondary battery 2 may function as a unit structure, which stores and supplies power, in the battery pack.

Hereinafter, the secondary battery 2 according to various embodiments of the present disclosure will be described.

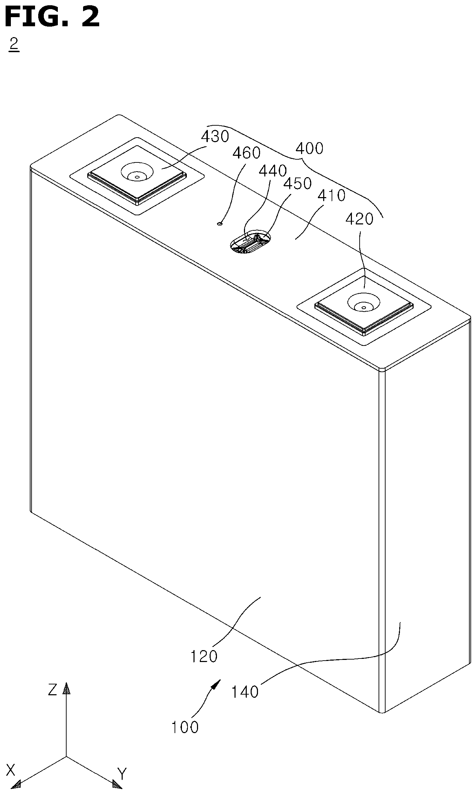

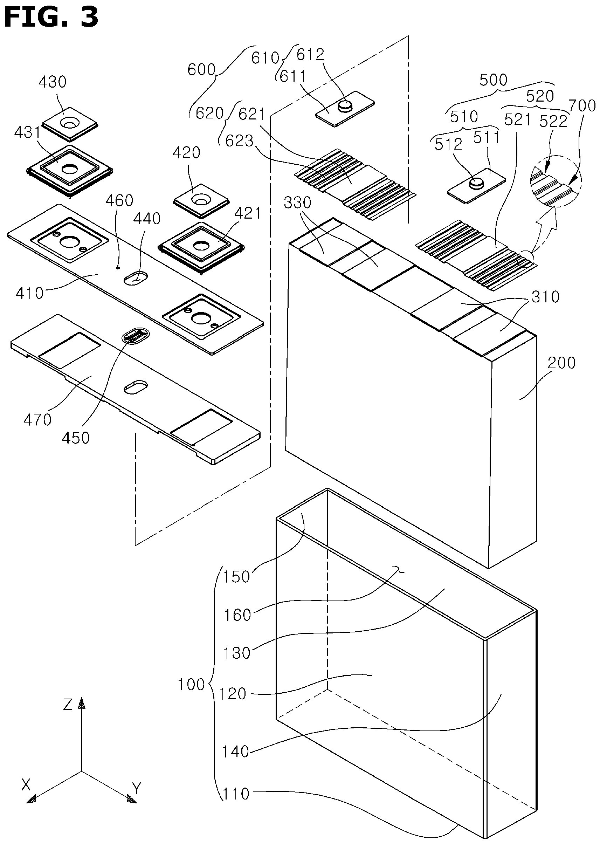

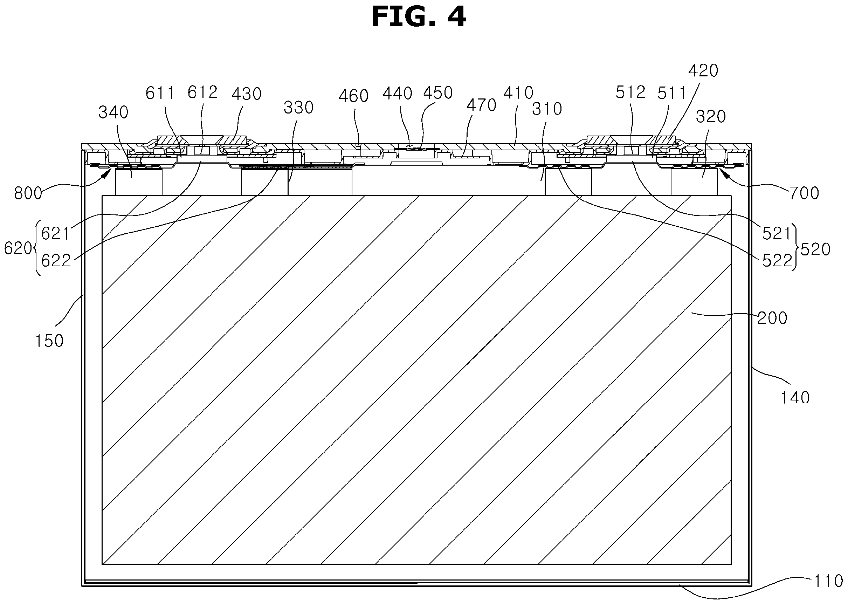

FIG. 2 is a perspective view schematically illustrating a configuration of the secondary battery according to one or more embodiments of the present disclosure, FIG. 3 is an exploded perspective view schematically illustrating a configuration of the secondary battery according to one or more embodiments of the present disclosure, and FIG. 4 is a cross-sectional view schematically illustrating a configuration of the secondary battery according to one or more embodiments of the present disclosure.

Hereinafter, a case in which the secondary battery 2 is a lithium-ion secondary battery having a prismatic shape will be described as an example. However, the secondary battery may be a lithium polymer battery or a cylindrical battery, for example.

Referring to FIGS. 2 to 4, the secondary battery 2 according to the present embodiment includes a case 100, an electrode assembly 200, a first tab member 310, a cap assembly 400, and a first connection member 500.

The case 100 forms a schematic exterior of the secondary battery 2 and may accommodate the electrode assembly 200.

The case 100 according to the present embodiment may include a bottom portion 110, a front surface portion 120, a rear surface portion 130, a first side surface portion 140, and a second side surface portion 150.

The bottom portion 110 may form a lower exterior of the case 100 (based on the orientation in FIG. 3). The bottom portion 110 according to the present embodiment may have a rectangular plate shape. The bottom portion 110 may be seated on a bottom surface of the housing body 11.

The front surface portion 120, the rear surface portion 130, the first side surface portion 140, and the second side surface portion 150 may form a perimeter exterior of the case 100.

The front surface portion 120, the rear surface portion 130, the first side surface portion 140, and the second side surface portion 150 according to the present embodiment may have the form of plates extending upward (based on the orientation in FIG. 3) from edges of the bottom portion 110. The front surface portion 120, the rear surface portion 130, the first side surface portion 140, and the second side surface portion 150 may be disposed to surround an upper space of the bottom portion 110. The front surface portion 120, the rear surface portion 130, the first side surface portion 140, and the second side surface portion 150 may have a rectangular cross-sectional shape.

The front surface portion 120 and the rear surface portion 130 may be disposed to face each other in a length direction of the housing 10. The front surface portion 120 and the rear surface portion 130 may be disposed parallel to each other. The front surface portion 120 and the rear surface portion 130 may have the same area.

The first side surface portion 140 and the second side surface portion 150 may be disposed to face each other in a width direction of the housing 10. The first side surface portion 140 and the second side surface portion 150 may be disposed parallel to each other. The first side surface portion 140 and the second side surface portion 150 may have the same area. The first side surface portion 140 and the second side surface portion 150 may each have a smaller area than each of the front surface portion 120 and the rear surface portion 130.

The case 100 may further include an opening 160. The opening 160 according to the present embodiment may refer to a space enclosed by the upper end portions of the front surface portion 120, the rear surface portion 130, the first side surface portion 140, and the second side surface portion 150. The opening 160 may interconnect the internal and external spaces of the case 100.

Accordingly, the case 100 according to the present embodiment may have a rectangular parallelepiped shape with an open upper side.

As described herein, a first direction may refer to a direction that is parallel to a Z-axis based on FIGS. 3 and 4 and extends from the bottom portion 110 toward the opening 160. A second direction may refer to a direction that is parallel to a Y-axis based on FIGS. 3 and 4 and extends from the first side surface portion 140 toward the second side surface portion 150. A third direction may refer to a direction that is parallel to an X-axis based on FIGS. 3 and 4 and extends from the front surface portion 120 toward the rear surface portion 130.

The electrode assembly 200 may function as a unit structure for performing power charging and discharging operations in the secondary battery 2. The electrode assembly 200 may be accommodated inside the case 100.

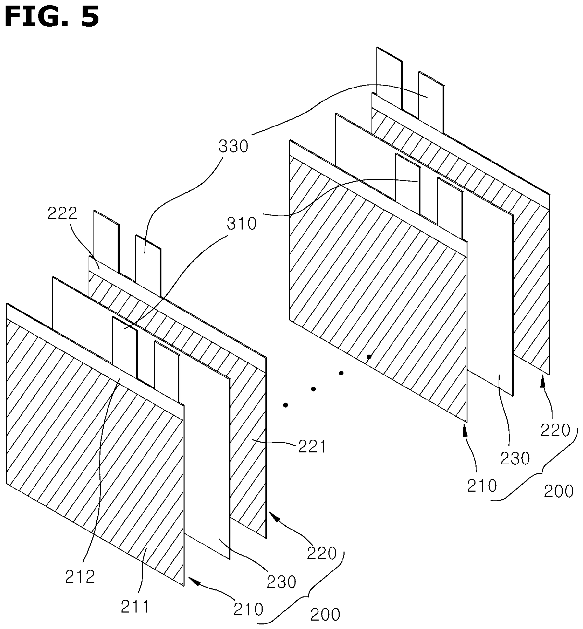

FIG. 5 is a view schematically illustrating a configuration of an electrode assembly according to one or more embodiments of the present disclosure.

Referring to FIG. 5, the electrode assembly 200 according to the present embodiment may include a first electrode 210, a second electrode 220, and a separator 230 disposed between the first electrode 210 and the second electrode 220. The first electrode 210, the separator 230, and the second electrode 220 may each be provided in plurality.

Hereinafter, a case in which the electrode assembly 200 has a stack form in which a plurality of first electrodes 210, a plurality of separators 230, and a plurality of second electrodes 220 are stacked sequentially in the third direction will be described as an example. However, the electrode assembly 200 may instead be formed in such a way that the first electrode 210, the separator 230, and the second electrode 220 are stacked and then wound around a winding axis C in a clockwise or counterclockwise direction.

The first electrode 210 may function as one of a positive electrode and a negative electrode of the electrode assembly 200. Hereinafter, a case in which the first electrode 210 is the positive electrode of the electrode assembly 200 will be described as an example. However, the first electrode 210 may instead function as the negative electrode of the electrode assembly 200.

The first electrode 210 according to the present embodiment may be formed as a foil including a metal material such as aluminum or an aluminum alloy. The type, size, shape, and the like of the first electrode 210 can be varied, as long as the first electrode 210 has conductivity and does not cause chemical changes in the secondary battery 2. A cross-sectional shape of the first electrode 210 may be changed in design to various shapes other than a rectangular shape shown in FIG. 5.

A plurality of first electrodes 210 may be provided. The plurality of first electrodes 210 may be arranged in the third direction between the front surface portion 120 and the rear surface portion 130 of the case 100. The number of the first electrodes 210 may be varied in design according to a charging capacity or the like of the secondary battery 2.

A first active material layer 211 may be applied to at least a portion of the first electrode 210. The first active material layer 211 may be applied to both (e.g., opposite) surfaces of the first electrode 210, or alternatively, may be applied to only one surface of the first electrode 210.

In the present embodiment, since the first electrode 210 functions as the positive electrode, the first active material layer 211 may include a positive electrode active material.

The positive electrode active material may include a compound (lithiated intercalation compound) capable of reversibly intercalating and deintercalating lithium. More specifically, the positive electrode active material may include one or more types of composite oxides of lithium and a metal selected from cobalt, manganese, nickel, iron, and a combination thereof.

For example, the positive electrode active material may include at least one of lithium-iron-phosphate oxide (LiFePO₄, LFP), lithium-manganese-iron-phosphate oxide (LiMnFePO₄, LMFP), and lithium-nickel-cobalt-manganese oxide (LiNiₓCo_{y}Mn_{z}O₂, NCM). Here, conditions of 0<x<1, 0<y<1, 0<z<1, and x+y+z=1 may be satisfied. The positive electrode active material may include only one of LiFePO₄, LiMnFePO₄, and LiNiₓCo_{y}Mn_{z}O₂, and may also include two or all of LiFePO₄, LiMnFePO₄, and LiNiₓCo_{y}Mn_{z}O₂.

The first active material layer 211 may further include a positive electrode conductive material.

The positive electrode conductive material is used to impart conductivity to the first active material layer 211, and any electrically conductive material that does not cause a chemical change in the battery may be used. Examples of the positive electrode conductive material may include a carbon-based material such as natural graphite, artificial graphite, carbon black, acetylene black, ketjen black, carbon fiber, carbon nanofiber, carbon nanotubes, and the like; a metal-based material in the form of a metal powder or metal fiber including copper, nickel, aluminum, silver, and the like; a conductive polymer such as a polyphenylene derivative; or a mixture thereof.

The first active material layer 211 may further include a positive electrode binder.

The positive electrode binder serves to adhere particles constituting the positive electrode active material to each other well, and to adhere the positive electrode active material to the first electrode 210 well.

Examples of the positive electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the positive electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The first electrode 210 may include a first uncoated portion 212 to which the first active material layer 211 is not applied. The first uncoated portion 212 according to the present embodiment may be disposed in an upper end region of the first electrode 210 (as oriented in FIG. 5), which is disposed to face the opening 160 from inside the case 100. However, the first uncoated portion 212 may be formed across the entire edge region of the first electrode 210.

The second electrode 220 can function as the other one of the positive electrode and the negative electrode of the electrode assembly 200. Hereinafter, a case in which the second electrode 220 is the negative electrode of the electrode assembly 200 will be described as an example. However, the second electrode 220 may instead function as the positive electrode of the electrode assembly 200.

A plurality of second electrodes 220 may be provided. The plurality of second electrodes 220 may be arranged in the third direction between the front surface portion 120 and the rear surface portion 130 of the case 100. The first electrode 210 and the second electrode 220 may be alternately disposed in the third direction. The second electrode 220 may be spaced apart from the first electrode 210 by a predetermined distance in the third direction.

The second electrode 220 according to the present embodiment may be formed of a foil including a metal material such as copper, a copper alloy, nickel, or a nickel alloy. The type, size, shape, and the like of the second electrode 220 may be varied, as long as the second electrode 220 has conductivity and does not cause chemical changes in the secondary battery. A cross-sectional shape of the second electrode 220 may be changed in design to various shapes other than a rectangular shape shown in FIG. 5.

A second active material layer 221 may be applied to at least a portion of the second electrode 220. The second active material layer 221 may be applied to both surfaces of the second electrode 220, or alternatively, may be applied to only one surface of the second electrode 220.

As the second electrode 220 functions as the negative electrode, the second active material layer 221 may include a negative electrode active material.

The negative electrode active material may be a material that reversibly intercalates/deintercalates lithium ions, a lithium metal, a lithium metal alloy, a material capable of doping and dedoping lithium, or a transition metal oxide.

The material capable of reversible intercalation and deintercalation of lithium ions is a carbon-based negative electrode active material, and may include, for example, crystalline carbon, amorphous carbon, or a combination thereof. Examples of the crystalline carbon may include graphite such as amorphous, plate-shaped, flake-shaped, spherical-shaped or fiber-shaped natural graphite or artificial graphite. Examples of the amorphous carbon may include soft carbon or hard carbon, a mesophase pitch carbide product, calcined coke, and the like.

The lithium metal alloy may be an alloy of lithium and a metal selected from Na, K, Rb, Cs, Fr, Be, Mg, Ca, Sr, Si, Sb, Pb, In, Zn, Ba, Ra, Ge, Al, and Sn.

A Si-based negative electrode active material or a Sn-based negative electrode active material may be used as the material capable of doping and dedoping lithium. The Si-based negative electrode active material may include silicon, a silicon-carbon composite, SiOₓ (0<x<2), a Si-Q alloy (where, Q is selected from an alkali metal, an alkaline-earth metal, a Group 13 element, a Group 14 element (excluding Si), a Group 15 element, a Group 16 element, a transition metal, a rare-earth element, and a combination thereof), or a combination thereof. The Sn-based negative electrode active material may include Sn, SnO₂, an Sn-based alloy, or a combination thereof.

The silicon-carbon composite may be a composite of silicon and amorphous carbon. According to one embodiment, the silicon-carbon composite may be in the form of silicon particles and amorphous carbon coated on the surface of the silicon particles. For example, the silicon-carbon composite may include a secondary particle (core) in which silicon primary particles are agglomerated and an amorphous carbon coating layer (shell) located on the surface of the secondary particle. The amorphous carbon may also be located between the silicon primary particles, such that, for example, the silicon primary particles are coated with amorphous carbon. The secondary particles may be dispersed in an amorphous carbon matrix.

The silicon-carbon composite may further include crystalline carbon. For example, the silicon-carbon composite may include a core including crystalline carbon and silicon particles and an amorphous carbon coating layer located on the surface of the core.

The Si-based negative electrode active material or the Sn-based negative electrode active material may be used by being mixed with a carbon-based negative electrode active material.

The second active material layer 221 may further include a negative electrode conductive material and a negative electrode binder.

The negative electrode conductive material is used to impart conductivity to the second active material layer 221, and any electrically conductive material that does not cause a chemical change in the battery may be used. Examples of the negative electrode conductive material may include a carbon-based material such as natural graphite, artificial graphite, carbon black, acetylene black, ketjen black, carbon fiber, carbon nanofiber, carbon nanotubes, and the like; a metal-based material in the form of a metal powder or metal fiber including copper, nickel, aluminum, silver, and the like; a conductive polymer such as a polyphenylene derivative; or a mixture thereof.

The negative electrode binder serves to adhere particles constituting the negative electrode active material to each other well, and to adhere the negative electrode active material to the second electrode 220 well.

Examples of the negative electrode binder may include a non-aqueous binder, an aqueous binder, a dry binder, or a combination thereof.

The non-aqueous binder may include polyvinylchloride, carboxylated polyvinylchloride, polyvinylfluoride, an ethylene propylene copolymer, polystyrene, polyurethane, polytetrafluoroethylene, polyvinylidene fluoride, polyethylene, polypropylene, polyamide-imide, polyimide, or a combination thereof.

The aqueous binder may be selected from styrene-butadiene rubber, (meth)acrylated styrene-butadiene rubber, (meth)acrylonitrile-butadiene rubber, (meth)acrylic rubber, butyl rubber, fluororubber, a polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenolic resin, an epoxy resin, polyvinyl alcohol, and a combination thereof.

When the aqueous binder is used as the negative electrode binder, a cellulose-based compound capable of imparting viscosity may be further included. As the cellulose-based compound, one or more of carboxymethyl cellulose, hydroxypropylmethyl cellulose, methyl cellulose, or alkali metal salts thereof may be used in combination. Na, K, or Li can be used as the alkali metal.

The dry binder is a polymer material capable of being fiberized, and may be, for example, polytetrafluoroethylene, polyvinylidene fluoride, a polyvinylidene fluoride-hexafluoropropylene copolymer, a polyethylene oxide, or a combination thereof.

The second electrode 220 may include a second uncoated portion 222 to which a second active material layer 221 is not applied. The second uncoated portion 222 according to the present embodiment may be disposed in an upper end region of the second electrode 220 disposed to face the opening 160 from inside the case 100. However, the second uncoated portion 222 may be formed across the entire edge region of the second electrode 220.

The separator 230 may be disposed between the first electrode 210 and the second electrode 220. The separator 230 may function to prevent short-circuiting of the first electrode 210 and the second electrode 220 while allowing the movement of lithium ions between the first electrode 210 and the second electrode 220.

The separator 230 may be disposed to cover the entire surface region of the electrode assembly 200. Accordingly, the separator 230 may prevent the first electrode 210 and the second electrode 220 from being directly exposed to the outside of the electrode assembly 200.

The separator 230 may be made of polyethylene, polypropylene, polyvinylidene fluoride, or a multilayer film of two or more layers thereof, and may also be made of a mixed multilayer film, such as a polyethylene/polypropylene double-layered separator, a polyethylene/polypropylene/polyethylene three-layered separator, and a polypropylene/polyethylene/polypropylene three-layered separator.

The separator 230 may include a porous substrate, and a coating layer including an organic material, an inorganic material, or a combination thereof located on one surface or both surfaces of the porous substrate.

The porous substrate may be a polymer film formed of a polymer, or a copolymer or a mixture of two or more selected from polyolefins such as polyethylene, polypropylene, and the like, polyesters such as polyethylene terephthalate, polybutylene terephthalate, and the like, polyacetal, polyamide, polyimide, polycarbonate, polyetheretherketone, polyaryletherketone, polyetherimide, polyamideimide, polybenzimidazole, polyether sulfone, a polyphenylene oxide, a cyclic olefin copolymer, polyphenylene sulfide, polyethylene naphthalate, glass fibers, polytetrafluoroethylene (PTFE), and polytetrafluoroethylene.

The organic material may include a polyvinylidene fluoride-based polymer or a (meth)acrylic-based polymer.

The inorganic material may include inorganic particles selected from Al₂O₃, SiO₂, TiO₂, SnO₂, CeO₂, MgO, NiO, CaO, GaO, ZnO, ZrO₂, Y₂O₃, SrTiO₃, BaTiO₃, Mg(OH)₂, boehmite, and a combination thereof, but the present disclosure is not limited thereto.

The organic and inorganic materials may be present by being mixed in one coating layer or may be present in a form in which a coating layer including organic materials and a coating layer including inorganic materials are stacked.

The first tab member 310 is connected to the first electrode 210, and may protrude outward from the electrode assembly 200. As, in this example the first electrode 210 is implemented as the positive electrode, the first tab member 310 may function as a positive electrode tab of the secondary battery 2. However, the first tab member 310 in other embodiments may function as a negative electrode tab of the secondary battery 2 when the first electrode 210 is the negative electrode.

The first tab member 310 according to the present embodiment may extend in the first direction from the electrode assembly 200. That is, the first tab member 310 may extend toward the opening 160 from inside the case 100.

The first tab member 310 according to the present embodiment may be configured as a pair.

In the present embodiment, the first tab member 310 is illustrated as being configured as a pair and extending in the first direction. However, the first tab member 310 may extend in the second direction and be connected to the first connection member 500, which will be described below

The first tab member 310 according to the present embodiment may have the form of a foil extending in the first direction from the first uncoated portion 212 of the first electrode 210. The first tab member 310 may have a substantially rectangular shape. However, the shape of the first tab member 310 may be variously changed in design.

The first tab member 310 may be integrally formed with the first electrode 210. For example, the first tab member 310 may be a remaining region of the first uncoated portion 212 after a partial region of the first uncoated portion 212 has been cut or removed through processes such as notching. Alternatively, the first tab member 310 may be fabricated separately from the first electrode 210 and then connected to the first uncoated portion 212 by welding or the like. The material of the first tab member 310 may be the same as the material of the first electrode 210.

A plurality of first tab members 310 may be provided. The number of the first tab members 310 may be the same as the number of the first electrodes 210. The first tab members 310 may individually extend from the first uncoated portions 212 of the different first electrodes 210, respectively. The adjacent first tab members 310 may be disposed to face each other in the third direction. The adjacent first tab members 310 may be disposed parallel to each other. Accordingly, the first tab member 310 according to the present embodiment may be an assembly of the plurality of first tab members 310 stacked in the third direction. The adjacent first tab members 310 may be in contact with each other and may be spaced apart from each other by a thickness of the separator 230.

The secondary battery 2 according to the present embodiment may further include a second tab member 330.

The second tab member 330 is connected to the second electrode 220, and may protrude outward from the electrode assembly 200. As, in the example, the second electrode 220 is implemented as the negative electrode, the second tab member 330 may function as a negative electrode tab of the secondary battery 2. However, the second tab member 330 is not limited thereto, and may function as a positive electrode tab of the secondary battery 2 when the second electrode 220 is the positive electrode.

The second tab member 330 according to the present embodiment may extend in the first direction from the electrode assembly 200. That is, the second tab member 330 may extend toward the opening 160 from inside the case 100.

The first tab member 310 and the second tab member 330 may be disposed to be spaced apart from each other in the second direction. In one example, the second tab member 330 may be disposed at a position spaced apart from the first tab member 310 in the second direction by a predetermined distance.

The second tab member 330 according to the present embodiment may be configured as a pair.

In the present embodiment, the second tab member 330 is illustrated as being configured as a pair and extending in the first direction. However, in other embodiments, the second tab member 330 may extend in the second direction and be connected to the second connection member 600, which will be described below

The second tab member 330 according to the present embodiment may be a foil extending in the first direction from the second uncoated portion 222 of the second electrode 220. The second tab member 330 may have a substantially rectangular shape. However, the shape of the second tab member 330 may be variously changed in design.

The second tab member 330 may be integrally formed with the second electrode 220. For example, the second tab member 330 may be a remaining region of the second uncoated portion 222 after a partial region of the second uncoated portion 222 has been cut or removed through processes such as notching. Alternatively, the second tab member 330 may be fabricated separately from the second electrode 220 and then connected to the second uncoated portion 222 by welding or the like. The material of the second tab member 330 may be the same as the material of the second electrode 220.

A plurality of second tab members 330 may be provided. The number of the second tab members 330 may be the same as the number of the second electrodes 220. The second tab members 330 may individually extend from the second uncoated portions 222 of the different second electrodes 220, respectively. The adjacent second tab members 330 may be disposed to face each other in the third direction. The adjacent second tab members 330 may be disposed parallel to each other. Accordingly, the second tab members 330 according to the present embodiment may be an assembly of the plurality of second tab members 330 stacked in the third direction. The adjacent second tab members 330 may be in contact with each other and may be spaced apart from each other by the thickness of the separator 230.

The cap assembly 400 may be coupled to the case 100 and may seal the case 100. The cap assembly 400 may be disposed to face the electrode assembly 200 in the first direction.

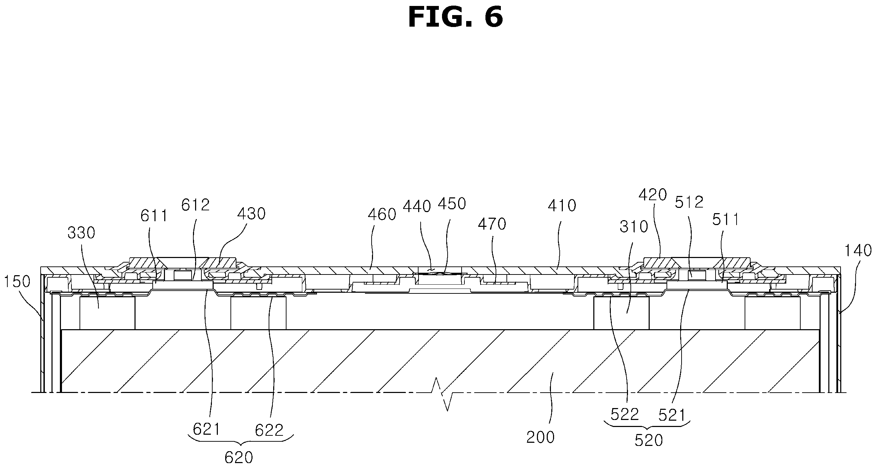

FIG. 6 is an enlarged view schematically illustrating a configuration of the cap assembly according to one or more embodiments of the present disclosure.

Referring to FIGS. 2 to 6, the cap assembly 400 according to the present embodiment may include a cap plate 410, a first terminal 420, and a second terminal 430.

The cap plate 410 forms a schematic exterior of the cap assembly 400, and may entirely support the first terminal 420 and the second terminal 430.

The cap plate 410 according to the present embodiment may be formed to have the shape of a flat plate. The cap plate 410 may be disposed in the opening 160 of the case 100. The cap plate 410 may be disposed to face the electrode assembly 200 in the first direction. That is, the cap plate 410 may be disposed at a position spaced apart from the electrode assembly 200 by a predetermined distance in the first direction. The cap plate 410 may be disposed parallel to the bottom portion 110 of the case 100.

The cap plate 410 may be seated on an upper end portion of the case 100, more specifically, on upper end portions of the front surface portion 120, the rear surface portion 130, the first side surface portion 140, and the second side surface portion 150. The cap plate 410 may be coupled to the case 100 by various types of coupling methods such as welding, bolting, and fitting coupling.

The first terminal 420 may protrude outward from the cap plate 410. The first terminal 420 may be electrically connected to the first electrode 210. As the first electrode 210 according to the present embodiment functions as the positive electrode, the first terminal 420 may be implemented as a positive electrode terminal of the secondary battery 2.

The first terminal 420 according to the present embodiment may be inserted into the cap plate 410. An upper end portion of the first terminal 420 may protrude from the cap plate 410 in the first direction. In FIG. 3, the first terminal 420 is illustrated as having a rectangular cross-sectional shape as an example, but the cross-sectional shape of the first terminal 420 may be changed in design to various shapes such as a circular, elliptical, or polygonal shape. The first terminal 420 may be formed of an electrically conductive material such as aluminum, nickel, copper, or the like.

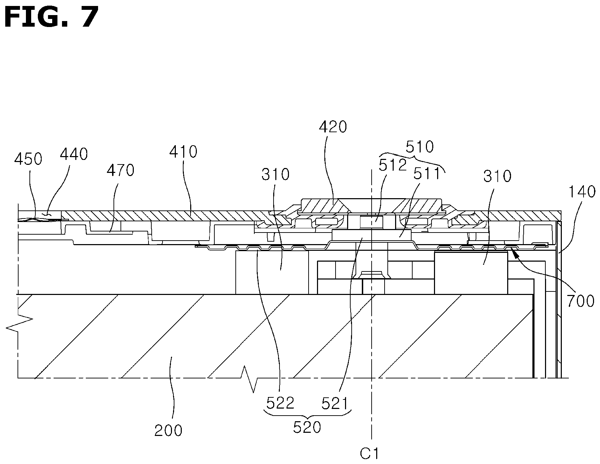

A first terminal axis C1 (see FIG. 7), which passes through a central portion of the first terminal 420 in the first direction, may be disposed between a pair of first tab members.

A first gasket 421 (see FIG. 3) may be installed between the cap plate 410 and the first terminal 420. The first gasket 421 may electrically isolate the cap plate 410 from the first terminal 420, and may prevent moisture or foreign substances from entering between the cap plate 410 and the first terminal 420.

The first gasket 421 according to the present embodiment may be formed of an insulating material such as polyethylene (PE), polypropylene (PP), polyethylene terephthalate (PET), rubber, or the like. The first gasket 421 may be fixed between the cap plate 410 and the first terminal 420 by press-fitting, injection molding, adhesion, or the like.

The second terminal 430 may protrude outward from the cap plate 410 at a position spaced apart from the first terminal 420. The second terminal 430 may be electrically connected to the second electrode 220. As the second electrode 220 according to the present embodiment functions as the negative electrode, the second terminal 430 may be implemented as a negative electrode terminal of the secondary battery 2.

The second terminal 430 according to the present embodiment may be inserted into the cap plate 410. An upper end portion of the second terminal 430 may protrude from the cap plate 410 in the first direction. In FIG. 3, the second terminal 430 is illustrated as having a rectangular cross-sectional shape as an example, but the cross-sectional shape of the second terminal 430 may be changed in design to various shapes such as a circular, elliptical, or polygonal shape. The second terminal 430 may be formed of an electrically conductive material such as aluminum, nickel, copper, or the like.

The second terminal 430 may be disposed at a position spaced apart from the first terminal 420 by a predetermined distance in the second direction. A second terminal axis C2, which passes through a central portion of the second terminal 430 in the first direction, may be disposed between a pair of second tab members.

A second gasket 431 may be installed between the cap plate 410 and the second terminal 430. The second gasket 431 may electrically isolate the cap plate 410 from the second terminal 430 and prevent moisture or foreign substances from entering between the cap plate 410 and the second terminal 430.

The second gasket 431 according to the present embodiment may be formed of an insulating material such as polyethylene (PE), polypropylene (PP), polyethylene terephthalate (PET), rubber, or the like. The second gasket 431 may be fixed between the cap plate 410 and the first terminal 420 by press-fitting, injection molding, adhesion, or the like.

The cap assembly 400 according to the present embodiment may further include a vent hole 440 and a vent 450.

The vent hole 440 according to the present embodiment may be formed to have the shape of a hole vertically passing through both surfaces of the cap plate 410 in the first direction. The vent hole 440 may function as a component that provides a path for flames, gases, smoke, or the like formed inside the case 100 to be discharged to the outside of the case 100 in the event of a thermal runaway of the secondary battery 2 due to overcurrent or the like. The vent hole 440 may be disposed between the first terminal 420 and the second terminal 430. A cross-sectional shape of the vent hole 440 may be changed in design into various shapes such as an oval shape, a circular shape, and a polygonal shape.

The vent 450 is installed in the vent hole 440, and may open and close in response to changes in an internal pressure of the case 100. That is, the vent 450 may close the vent hole 440 during a normal operation of the secondary battery 2 to prevent the electrolyte or the like inside the case 100 from leaking out of the case 100, or to block moisture, foreign substances, or the like from entering the case 100. The vent 450 may open the vent hole 440 during thermal runaway of the secondary battery 2 to guide flames, gases, smoke, or the like formed inside the case 100 to be discharged to the outside of the case 100.

The vent 450 according to the present embodiment may be formed to have a substantially plate shape. The vent 450 may be fixed to the cap plate 410 by various types of coupling methods such as welding, bolting, and fitting coupling. The vent 450 may be disposed inside the vent hole 440, or may be disposed above or below the cap plate 410 to face the vent hole 440 in the first direction.

A thickness of the vent 450 in the first direction may be less than a thickness of the cap plate 410. Accordingly, the vent 450 may easily rupture or fracture when the internal pressure of the case 100 rises. The vent 450 may include a notch formed to be recessed inward of the vent 450 to preferentially fracture when the internal pressure of the case 100 rises.

The cap assembly 400 according to the present embodiment may further include an electrolyte injection port 460 which is formed through the cap plate 410 and in which a sealing cap may be installed. The electrolyte injection port 460 may be disposed to be spaced apart by a predetermined distance from the vent hole 440 in the second direction or in the direction opposite to the second direction. The electrolyte injection port 460 may be disposed between the first terminal 420 and the second terminal 430.

The cap assembly 400 according to the present embodiment may further include an insulating plate 470.

The insulating plate 470 may be disposed between the cap plate 410 and the electrode assembly 200. The insulating plate 470 may insulate the cap plate 410 from the electrode assembly 200 by preventing direct contact therebetween. The insulating plate 470 may fix the position of the electrode assembly 200 inside the case 100. The insulating plate 470 may prevent the electrode assembly 200 from breaking when the cap plate 410 is deformed inwardly of the case 100, such as by an external impact.

The insulating plate 470 according to the present embodiment may be disposed inside the case 100 to face the electrode assembly 200 in the first direction. That is, the electrode assembly 200, the insulating plate 470, and the cap plate 410 may be sequentially disposed in the first direction. The insulating plate 470 may be fixed to an inner side surface of the case 100 by various types of coupling methods, such as fitting coupling, welding, bolting, adhesion, and the like. The insulating plate 470 may be in contact with one surface of the electrode assembly 200 from which the first tab member 310 and the second tab member 330 extend. The insulating plate 470 may be formed of an insulating material such as polyethylene (PE), polypropylene (PP), polyethylene terephthalate (PET), rubber, or the like.

The first connection member 500 may be disposed between the electrode assembly 200 and the cap assembly 400. The first connection member 500 may be connected to the first terminal 420 and the first tab member 310.

FIG. 7 is an enlarged view schematically illustrating a configuration of the first connection member according to one or more embodiments of the present disclosure.

Referring to FIGS. 2 to 7, the first connection member 500 according to the present embodiment may include a first current collector 510 and a first current collector plate 520.

The first current collector 510 may be connected to the first terminal 420.

The first current collector 510 according to the present embodiment may include a first body 511 and a first boss 512.

The first body 511 forms one side of the exterior of the first current collector 510, and may support the first boss 512.

The first body 511, according to the present embodiment, may be disposed between the electrode assembly 200 and the first terminal 420. The first body 511 may be spaced apart from a lower surface of the first terminal 420 by a predetermined distance in the first direction. The first terminal axis C1 may pass through a central portion of the first body 511. The first body 511 may be disposed in the insulating plate 470, or alternatively, the first body 511 may also be disposed on an upper or lower side of the insulating plate 470. A cross-sectional shape of the first body 511 may be variously changed in design, such as a circular shape, an oval shape, a polygonal shape, and the like, in addition to a rectangular shape illustrated in FIG. 3.

The first boss 512 extends from the first body 511, and may be connected to the first terminal 420.

The first boss 512 according to the present embodiment may have the form of a cylinder extending in the first direction from the first body 511. A central axis of the first boss 512 may be positioned to be coaxial with the first terminal axis C1. An upper end surface of the first boss 512 may be in contact with the lower surface of the first terminal 420. In this case, the first boss 512 may vertically pass through the insulating plate 470 in the first direction. The upper end surface of the first boss 512 may be bonded to the lower surface of the first terminal 420 by laser welding. A cross-sectional shape of the first boss 512 may be variously changed in design, such as an oval shape, a polygonal shape, and the like, in addition to a circular shape illustrated in FIG. 3.

The first current collector plate 520 is fixed to the first current collector 510, and may be connected to the first tab member 310.

The first current collector plate 520 according to the present embodiment may include a first center plate 521 and first outer plates 522.

The first center plate 521 forms a central portion of the exterior of the first current collector plate 520, and may be connected to the first current collector 510.

The first center plate 521 according to the present embodiment may be disposed between the first body 511 and the electrode assembly 200. The first center plate 521 may be in contact with a lower surface of the first body 511 located on the opposite side of the first boss 512. The first center plate 521 may be fixed to the lower surface of the first body 511 by various types of coupling methods, such as fitting coupling, welding, bolting, adhesion, and the like.

Both end portions of the first center plate 521 may extend from the first body 511 toward the electrode assembly 200. Both end portions of the first center plate 521 may pass through the insulating plate 470 and be disposed below the insulating plate 470.

The first outer plates 522 may extend in the second direction from the first current collector 510.

The first outer plates 522 according to the present embodiment may extend from both sides of the first center plate 521 in the second direction. The first outer plates 522 may be disposed to face the first tab member 310 in the first direction. The first outer plates 522 may be in contact with an end surface of the first tab member 310.

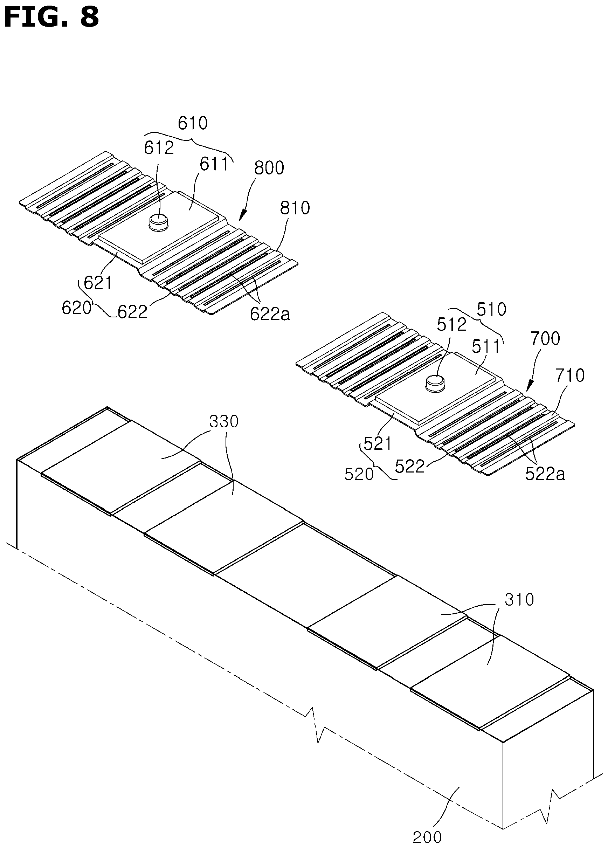

The first tab member 310 and the first outer plate 522 may be bonded to each other by laser welding. In one example, first weld lines 522a (see FIG. 8) may be formed on the first tab member 310 and the first outer plate 522.

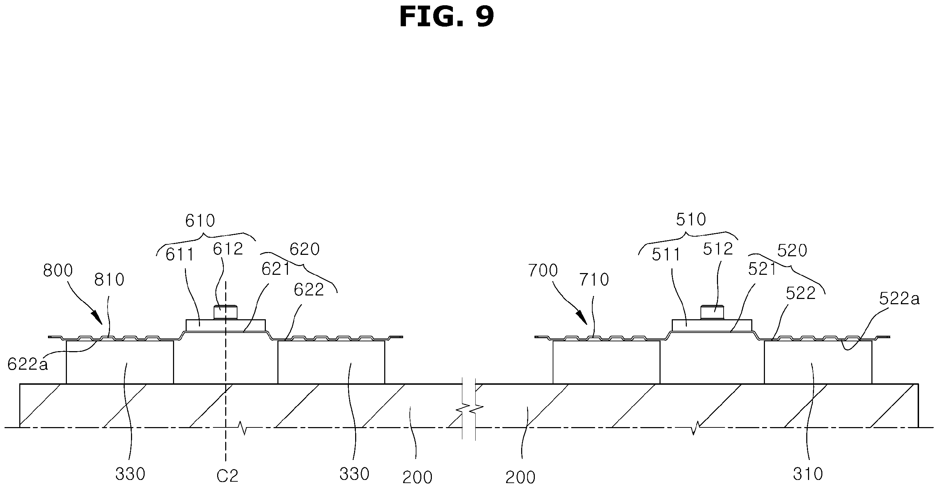

FIG. 8 is a perspective view schematically illustrating the connection members according to one or more embodiments of the present disclosure, and FIG. 9 is a cross-sectional view schematically illustrating the connection members according to one or more embodiments of the present disclosure.

Referring to FIGS. 8 and 9, as described above, the first current collector plate 520 according to the present embodiment may include the first center plate 521 and the first outer plates 522, and the first outer plates 522 may extend from both sides of the first center plate 521 in the second direction.

In addition, the first outer plates 522 are formed in the same size or in different sizes from each other, and may be disposed facing the first tab member 310 and bonded to the first tab member 310 by laser welding.

The first weld lines 522a may extend from the first outer plate 522 toward the first tab member 310.

The first weld lines 522a may be formed as mixtures of the first outer plate 522 and the first tab member 310, which are melted by heat generated during laser welding, solidify.

The first weld lines 522a may protrude linearly on an outer side surface of the first outer plate 522 disposed to face the second direction. The first weld lines 522a may be disposed parallel to the third direction. Accordingly, the first weld lines 522a can simultaneously bond the plurality of first tab members 310 stacked in the third direction to the first outer plate 522.

The first connection member 500 (see FIG. 3) may include a first deformation prevention part 700 that minimizes thermal deformation when connected to the first tab member 310.

The first deformation prevention part 700 may be composed of a plurality of reinforcement protrusions 710 formed on the first outer plate 522. In one example, the first deformation prevention part 700 is composed of the plurality of reinforcement protrusions 710 disposed parallel to a direction in which the first outer plate 522 and the first tab member 310 are welded. That is, the first deformation prevention part 700 may be disposed parallel to the third direction.

The first deformation prevention part 700 may be composed of the plurality of reinforcement protrusions 710 protruding from the first outer plate 522 in the first direction, and since the plurality of reinforcement protrusions 710 protrude in the first direction, the plurality of reinforcement protrusions 710 correspond to a space formed due to the height of the first center plate 521 and the first current collector 510, thereby improving space utilization. In addition, since the first deformation prevention part 700 is composed of the plurality of reinforcement protrusions 710, which can form irregularities on the first outer plate 522, thermal deformation caused by laser welding can be minimized and flatness of the first outer plate 522 can be ensured. In addition, the amount of heat input during laser welding can be reduced, and the amount of deformation can also decrease.

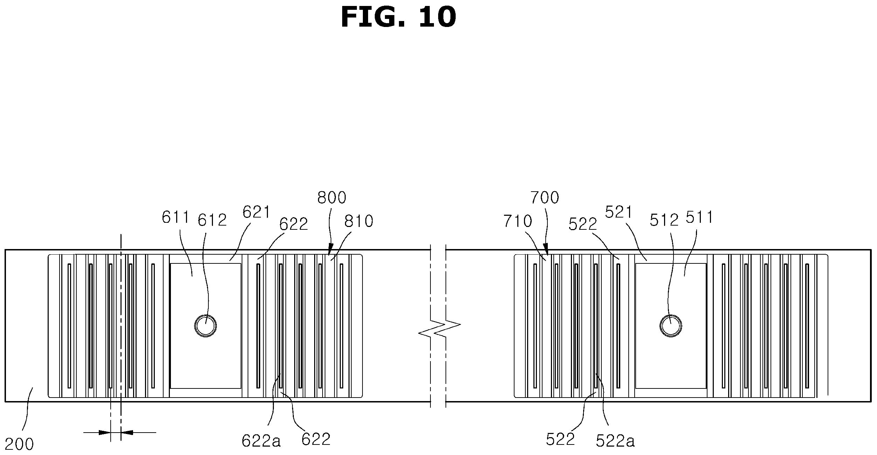

FIG. 10 is a view schematically illustrating the weld lines and a configuration of the deformation prevention part according to one or more embodiments of the present disclosure.

Referring to FIG. 10, the number of the reinforcement protrusions 710 may correspond to the number of the first weld lines 522a. By forming the reinforcement protrusions 710 on both sides of the first weld line 522a in the second direction, thermal deformation caused by laser welding can be minimized.

A centerline distance between the first weld line 522a and the reinforcement protrusions 710 formed on the first outer plate 522 may range from 3 mm to 4 mm, or by any suitable distance.

The secondary battery 2 according to the present embodiment may further include a second connection member 600 (see FIG. 3).

The second connection member 600 may be disposed between the electrode assembly 200 and the cap assembly 400. The second connection member 600 may be connected to the second terminal 430 and the second tab member 330. The second connection member 600 may function as a component that electrically connects the second terminal 430 and the second tab member 330. The second connection member 600 may be formed of an electrically conductive material. The second connection member 600 may be formed of the same material as the second terminal 430.

Referring to FIGS. 2 to 6, the second connection member 600 according to the present embodiment may include a second current collector 610 and a second current collector plate 620.

The second current collector 610 may be connected to the second terminal 430.

The second current collector 610 according to the present embodiment may include a second body 611 and a second boss 612.

The second body 611 forms one side of the exterior of the second current collector 610, and may support the second boss 612.

The second body 611 according to the present embodiment may be disposed between the electrode assembly 200 and the second terminal 430. The second body 611 may be spaced apart from a lower surface of the second terminal 430 by a predetermined distance in the first direction. The second terminal axis C2 (see FIG. 9) may pass through a central portion of the second body 611. The second body 611 may be disposed in the insulating plate 470, or alternatively, the second body 611 may also be disposed on an upper or lower side of the insulating plate 470. A cross-sectional shape of the second body 611 may be variously changed in design, such as a circular shape, an oval shape, a polygonal shape, and the like, in addition to a rectangular shape illustrated in FIG. 3.

The second boss 612 extends from the second body 611, and may be connected to the second terminal 430.

The second boss 612 according to the present embodiment may have the form of a cylinder extending in the first direction from the second body 611. A central axis of the second boss 612 may be positioned to be coaxial with the second terminal axis C2. An upper end surface of the second boss 612 may be in contact with the lower surface of the second terminal 430. In this case, the second boss 612 may vertically pass through the insulating plate 470 in the second direction. The upper end surface of the second boss 612 may be bonded to the lower surface of the second terminal 430 by laser welding. A cross-sectional shape of the second boss 612 may be variously changed in design, such as an oval shape, a polygonal shape, and the like, in addition to a circular shape illustrated in FIG. 3.

The second current collector plate 620 is fixed to the second current collector 610, and may be connected to the second tab member 330.

The second current collector plate 620 according to the present embodiment may include a second center plate 621 and second outer plates 622 (see FIG. 6).

The second center plate 621 forms a central portion of the exterior of the second current collector plate 620, and may be connected to the second current collector 610.

The second center plate 621 according to the present embodiment may be disposed between the second body 611 and the electrode assembly 200. The second center plate 621 may be in contact with a lower surface of the second body 611 located on the opposite side of the second boss 612. The second center plate 621 may be fixed to the lower surface of the second body 611 by various types of coupling methods, such as fitting coupling, welding, bolting, adhesion, and the like.

Both end portions of the second center plate 621 may extend from the second body 611 toward the electrode assembly 200. Both end portions of the second center plate 621 may pass through the insulating plate 470 and be disposed below the insulating plate 470.

The second outer plates 622 may extend in the second direction from the second current collector 610.

The second outer plates 622 according to the present embodiment may extend from both sides of the second center plate 621 in the second direction. The second outer plates 622 may be disposed to face the second tab member 330 in the first direction. The second outer plates 622 may be in contact with an end surface of the second tab member 330.

The second tab member 330 and the second outer plate 622 may be bonded to each other by laser welding. In one example, second weld lines 622a may be formed on the second tab member 330 and the second outer plate 622.

Referring to FIGS. 8 and 9, as described above, the second current collector plate 620 according to the present embodiment may include the second center plate 621 and the second outer plates 622, and the second outer plates 622 may extend from both sides of the second center plate 621 in the second direction.

In addition, the second outer plates 622 are formed in the same size or in different sizes from each other, and may be disposed facing the second tab member 330 and bonded to the second tab member 330 by laser welding.

The second weld lines 622a may extend from the second outer plate 622 toward the second tab member 330.

The second weld lines 622a may be formed as mixtures of the second outer plate 622 and the second tab member 330, which are melted by heat generated during laser welding, solidify.

The second weld lines 622a may protrude linearly on an outer side surface of the second outer plate 622 disposed to face the second direction. The second weld lines 622a may be disposed parallel to the third direction. Accordingly, the second weld lines 622a can simultaneously bond the plurality of second tab members 330 stacked in the third direction to the second outer plate 622.

The second connection member 600 may include a second deformation prevention part 800 that minimizes thermal deformation when connected to the second tab member 330.

The second deformation prevention part 800 may be composed of a plurality of reinforcement protrusions 810 formed on the second outer plate 622. In one example, the second deformation prevention part 800 is composed of the plurality of reinforcement protrusions 810 disposed parallel to a direction in which the second outer plate 622 and the second tab member 330 are welded. That is, the reinforcement protrusions 810 may be disposed parallel to the third direction.

The second deformation prevention part 800 may be composed of the plurality of reinforcement protrusions 810 protruding from the second outer plate 622 in the first direction, and since the plurality of reinforcement protrusions 810 protrude in the first direction, the plurality of reinforcement protrusions 810 correspond to a space formed due to the height of the second center plate 621 and the second current collector 610, thereby improving space utilization. In addition, since the second deformation prevention part 800 is composed of the plurality of reinforcement protrusions 810, which can form irregularities on the second outer plate 622, thermal deformation caused by laser welding can be minimized and flatness of the second outer plate 622 can be ensured. In addition, the amount of heat input during laser welding can be reduced, and the amount of deformation can also decrease.

Referring to FIG. 10, the number of the reinforcement protrusions 810 may correspond to (e.g., match) the number of the second weld lines 622a. By forming the reinforcement protrusions 810 on both sides of the second weld line 622a in the second direction, thermal deformation caused by laser welding can be minimized.

A centerline distance between the second weld line 622a and the reinforcement protrusions 810 formed on the second outer plate 622 may range from 3 mm to 4 mm, or by any suitable distance.

Meanwhile, the first and second deformation prevention parts 700 and 800 may be variously changed in shape.

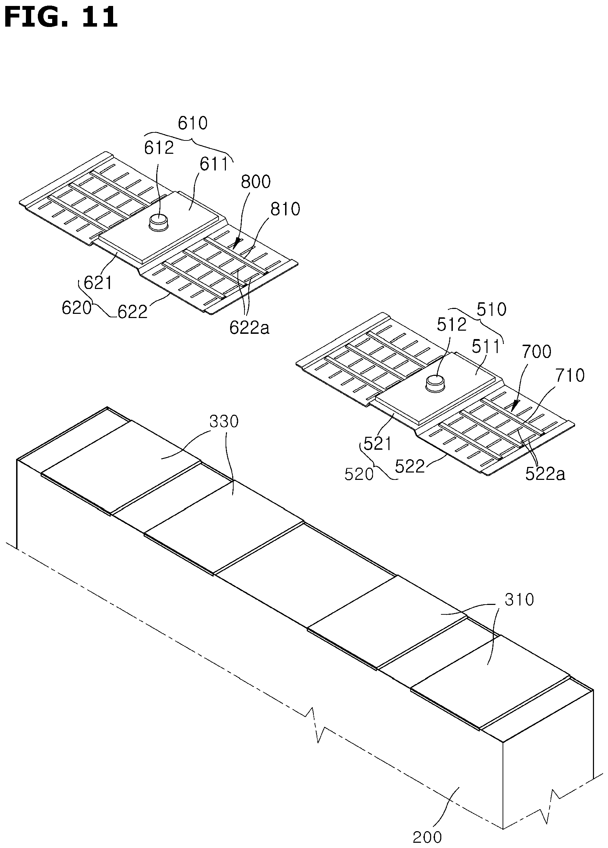

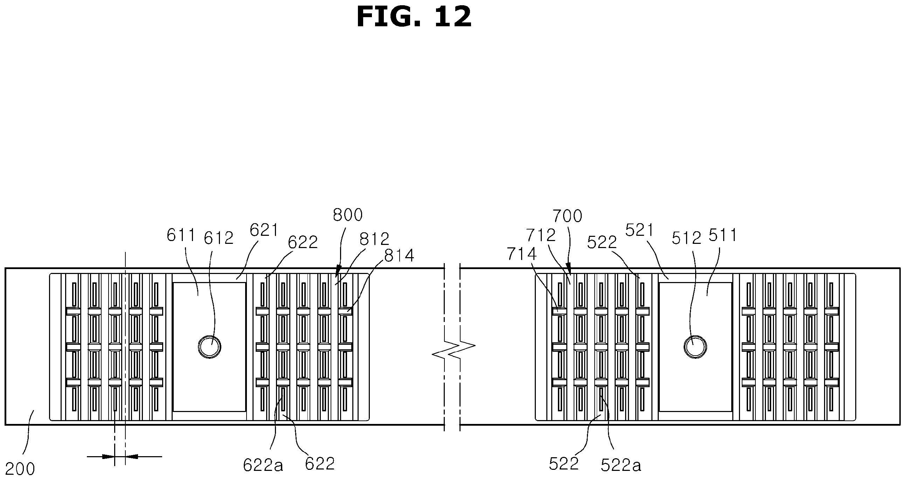

FIG. 11 is a view illustrating a first modified example of the deformation prevention part according to one or more embodiments of the present disclosure, and FIG. 12 is a view illustrating a second modified example of the deformation prevention part according to one or more embodiments of the present disclosure.

Referring to FIGS. 11 and 12, the first and second deformation prevention parts 700 and 800 according to the present embodiment may be variously changed in shape.

As shown in FIG. 11, the first deformation prevention part 700 may be composed of a plurality of reinforcement protrusions 710 disposed perpendicular to a welding direction of the first outer plate 522 and the first tab member 310. Similarly, the second deformation prevention part 800 may be composed of a plurality of reinforcement protrusions 810 disposed perpendicular to a welding direction of the second outer plate 622 and the second tab member 330.

In addition, as shown in FIG. 12, the first deformation prevention part 700 may include a plurality of first reinforcement protrusions 712 disposed parallel to the welding direction of the first outer plate 522 and the first tab member 310, and a plurality of second reinforcement protrusions 714 disposed in a direction intersecting the first reinforcement protrusions 712. Similarly, the second deformation prevention part 800 may include a plurality of first reinforcement protrusions 812 disposed parallel to the welding direction of the second outer plate 622 and the second tab member 330, and a plurality of second reinforcement protrusions 814 disposed in a direction intersecting the first reinforcement protrusions 812.

In the present embodiments, it is illustrated that the first deformation prevention part 700 is composed of the plurality of reinforcement protrusions 710 disposed parallel to the first weld line 522a or disposed perpendicular to the first weld line 522a, or is composed of the first reinforcement protrusions 712 and the second reinforcement protrusions 714, which intersect each other, and the second deformation prevention part 800 is composed of the plurality of reinforcement protrusions 810 disposed parallel to the second weld line 622a or disposed perpendicular to the second weld line 622a, or is composed of the first reinforcement protrusions 812 and the second reinforcement protrusions 814, which intersect each other, However, the present disclosure is not limited thereto, and other configurations that can minimize thermal deformation caused by welding of the flat-shaped first and second outer plates 522 and 622 are also possible.

For example, embossments of various shapes may be formed by bypassing the first and second weld lines 522a and 622a.

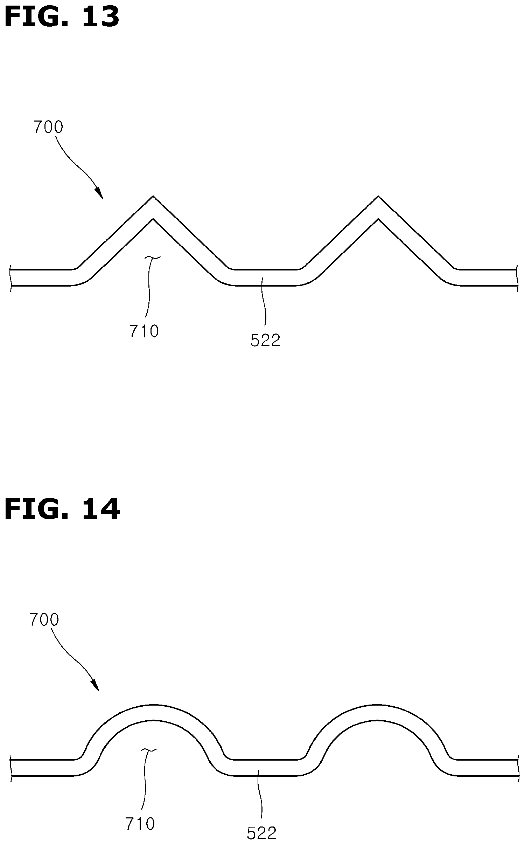

FIGS. 13 and 14 are views for describing cross-sectional shapes of the first deformation prevention part according to one or more embodiments of the present disclosure.

The first deformation prevention part 700 is composed of the reinforcement protrusions 710 that are formed to protrude upward from the first outer plate 522, and the reinforcement protrusions 710 may be formed with an inverted "V"-shaped cross-section as shown in FIG. 13, or with an inverted "U"-shaped cross-section as shown in FIG. 14.

Of course, the second deformation prevention part 800 may also be formed with an inverted 'V'-shaped cross-section or an inverted 'U'-shaped cross-section, similar to the first deformation prevention part 700.

According to one embodiment of the present disclosure, a deformation prevention part can prevent situations in which flatness is not ensured when welding is performed to electrically connect a tab and a terminal of an electrode assembly, thereby securing electrical reliability.

The present disclosure is directed to providing a secondary battery capable of minimizing thermal deformation caused by the excessive amount of heat input during welding for tab connections, and a battery pack including the same.

Example embodiments have been disclosed herein, and although specific terms are employed, they are used and are to be interpreted in a generic and descriptive sense only and not for purpose of limitation. In some instances, as would be apparent to one of ordinary skill in the art as of the filing of the present application, features, characteristics, and/or elements described in connection with a particular embodiment may be used singly or in combination with features, characteristics, and/or elements described in connection with other embodiments unless otherwise specifically indicated. Accordingly, it will be understood by those of skill in the art that various changes in form and details may be made without departing from the scope of the present invention as set forth in the following claims.

Embodiments are set out in the following clauses:
Clause 1. A battery pack, comprising:
   a housing; and
   a plurality of secondary batteries disposed inside the housing,
   wherein each of the secondary batteries includes:
      a case;
      an electrode assembly inside the case, the electrode assembly including a first electrode and a second electrode;
      a first tab member connected to the first electrode, the first tab member extending from the electrode assembly;
      a cap assembly facing the electrode assembly, the cap assembly including a first terminal and a second terminal; and
      a first connection member between the electrode assembly and the cap assembly, the first connection member connected to the first terminal and the first tab member, the first connection member including a first deformation prevention part configured to prevent thermal deformation when connected to the first tab member.
Clause 2. The battery pack as claimed in clause 1, further comprising:
   a second tab member connected to the second electrode, the second tab member spaced apart from the first tab member; and
   a second connection member between the electrode assembly and the cap assembly, the second connection member connected to the second terminal and the second tab member, the second connection member including a second deformation prevention part configured to prevent thermal deformation when connected to the second tab member.
Clause 3. The battery pack as claimed in clause 2, wherein:
   the first deformation prevention part includes a plurality of reinforcement protrusions on the first connection member, and
   the second deformation prevention part includes a plurality of reinforcement protrusions on the second connection member.
Clause 4. The battery pack as claimed in clause 2 or clause 3, wherein:
   the first deformation prevention part includes a plurality of reinforcement protrusions, the plurality of reinforcement protrusions being parallel to a first weld line of the first connection member and the first tab member, and
   the second deformation prevention part includes a plurality of reinforcement protrusions, the plurality of reinforcement protrusions being parallel to a second weld line of the second connection member and the second tab member.
Clause 5. The battery pack as claimed in any of clauses 2 to 4, wherein:
   the first deformation prevention part includes a plurality of reinforcement protrusions that are perpendicular to a first weld line of the first connection member and the first tab member, and
   the second deformation prevention part includes a plurality of reinforcement protrusions that are perpendicular to a second weld line of the second connection member and the second tab member.

## Claims

1. A secondary battery, comprising:
a case;
an electrode assembly inside the case, the electrode assembly including a first electrode and a second electrode;
a first tab member connected to the first electrode, the first tab member extending from the electrode assembly;
a cap assembly facing the electrode assembly, the cap assembly including a first terminal and a second terminal; and
a first connection member between the electrode assembly and the cap assembly, the first connection member being connected to the first terminal and the first tab member, the first connection member further including a first deformation prevention part configured to prevent thermal deformation when connected to the first tab member.

2. The secondary battery as claimed in claim 1, wherein the first connection member includes:
a first current collector connected to the first terminal; and
a first current collector plate fixed to the first current collector, the first current collector plate being connected to the first tab member.

3. The secondary battery as claimed in claim 2, wherein the first current collector plate includes:
a first center plate in contact with the first current collector; and
a first outer plate extending outward from the first center plate, the first outer plate being welded to the first tab member.

4. The secondary battery as claimed in claim 3, wherein:
the first tab member includes a pair of first tab members spaced apart from each other, and
the first outer plate includes a pair of first outer plates extending from opposite sides of the first center plate, the pair of first outer plates being connected to the pair of first tab members.

5. The secondary battery as claimed in claim 3 or claim 4, wherein the first deformation prevention part includes a plurality of reinforcement protrusions on the first outer plate.

6. The secondary battery as claimed in claim 3 or claim 4, wherein the first deformation prevention part includes a plurality of reinforcement protrusions on the first outer plate, the first deformation prevention part being parallel to a first weld line of the first tab member.

7. The secondary battery as claimed in claim 6, wherein the plurality of reinforcement protrusions protrude upward from the first outer plate.

8. The secondary battery as claimed in claim 6 or claim 7, wherein a centerline distance between the first weld line and the plurality of reinforcement protrusions, which are on the first outer plate, ranges from 3 mm to 4 mm.

9. The secondary battery as claimed in any of claims 3 to 8, wherein the first deformation prevention part includes a plurality of reinforcement protrusions on the first outer plate, the plurality of reinforcement protrusions being perpendicular to a first weld line of the first tab member.

10. The secondary battery as claimed in any of claims 3 to 9, wherein the first deformation prevention part includes:
a plurality of first reinforcement protrusions on the first outer plate, the plurality of first reinforcement protrusions being parallel to a first weld line of the first tab member; and
a plurality of second reinforcement protrusions intersecting the first reinforcement protrusions.

11. The secondary battery as claimed in any of claims 1 to 10, further comprising:
a second tab member connected to the second electrode, the second tab member spaced apart from the first tab member; and
a second connection member between the electrode assembly and the cap assembly, the second connection member connected to the second terminal and the second tab member, the second connection member including a second deformation prevention part configured to prevent thermal deformation when connected to the second tab member.

12. The secondary battery as claimed in claim 11, wherein the second connection member includes:
a second current collector connected to the second terminal; and
a second current collector plate fixed to the second current collector, the second current collector plate connected to the second tab member.

13. The secondary battery as claimed in claim 12, wherein the second current collector plate includes:
a second center plate in contact with the second current collector; and
a second outer plate extending outward from the second center plate, the second outer plate being welded and connected to the second tab member.

14. The secondary battery as claimed in claim 13, wherein:
the second tab member includes a pair of second tab members spaced apart from each other, and
the second outer plate includes a pair of second outer plates, the pair of second outer plates extending from opposite sides of the second center plate and connected to the pair of second tab members.

15. A battery pack, comprising:
a housing; and
a plurality of secondary batteries disposed inside the housing,
wherein each of the secondary batteries includes:
a case;
an electrode assembly inside the case, the electrode assembly including a first electrode and a second electrode;
a first tab member connected to the first electrode, the first tab member extending from the electrode assembly;
a cap assembly facing the electrode assembly, the cap assembly including a first terminal and a second terminal; and
a first connection member between the electrode assembly and the cap assembly, the first connection member connected to the first terminal and the first tab member, the first connection member including a first deformation prevention part configured to prevent thermal deformation when connected to the first tab member.
